# EUROPÄISCHE PATENTANMELDUNG

(11) **EP 1 231 413 A2**
(43) Veröffentlichungstag der Anmeldung: **14.08.2002**
(21) Anmeldenummer: 02001847.9
(22) Anmeldetag: 26.01.2002
(51) Int. Cl.: F16H 47/02

(54) **Synchrongetriebe**

(30) Priorität: 01.02.2001 DE 10104420
(71) Anmelder: ZF FRIEDRICHSHAFEN Aktiengesellschaft, 88038 Friedrichshafen (DE)
(72) Erfinder: Eymüller, Helmut, 88046 Friedrichshafen (DE); Stützle, Siegfried, 88045 Friedrichshafen (DE)

(57) **Zusammenfassung**

Das Synchrogetriebe weist einen Hydromotor (3) sowie eine Schalteinrichtung (4) auf, die mittels eines Schaltventiles und eines Hydraulikzylinders betätigbar ist. Der Hydromotor (3) ist dabei ein Nullhubmotor und die Antriebswelle (1) ist in einem Lager im Getriebe und in der Antriebswelle des Hydromotors (3) gelagert. Als Schalteinrichtung (4) ist eine Sperrsynchronisierung vorgesehen, die auf der Abtriebswelle (2) angeordnet ist. Eine Schaltgabel ist auf einer Schaltschiene befestigt, die als Kolben mit unterschiedlichen Kolbenflächen ausgebildet ist. Ein am Getriebe angeordneter Ventilblock enthält ein Druckminderventil und ein 4/2-Wegeventil für das Schalten der Gänge, das elektrisch ansteuerbar und mechanisch in der geschalteten Position feststellbar ist.

## Beschreibung

Die vorliegende Erfindung betrifft ein Synchrogetriebe, mit einer Antriebswelle, mit einer Abtriebswelle, mit einem Hydromotor, sowie mit einer Schalteinrichtung, nach dem Oberbegriff des Anspruchs 1.

Ein derartiges, als Zweigang-Getriebe ausgebildetes Synchrogetriebe eignet sich insbesondere für mobile Bauund Arbeitsmaschinen.

Bekannte Zweigang-Getriebe sind beispielsweise Stillstandsgetriebe, deren Rädersatz durch Verschieben einer Schaltklaue in Eingriff gebracht wird. Nachteilig ist dabei noch, dass der Gangwechsel nur bei Stillstand oder bei sehr kleinen Differenzdrehzahlen erfolgen darf und dass das Durchschalten des Ganges im Stillstand oftmals nicht möglich ist, da die Schaltklaue Zahn auf Zahn steht. Des weiteren ist eine Absicherung erforderlich, die während der Fahrt einen Schaltvorgang verhindert, zum Schutz der Schaltklauen.

Es sind auch Schaltgetriebe mit Lamellenkupplungen für einen besseren Schaltkomfort vorgeschlagen worden. Zwar ist damit ein Gangwechsel während der Fahrt möglich, der Getriebeaufbau ist jedoch aufwendiger, wobei höhere Schleppverluste aufgrund der Kupplungslamellen auftreten und damit Leistungsverluste. Beispielsweise beschreibt die EP A 137 406 eine Vorrichtung zum regelbaren Antrieb großer Massen, insbesondere zum Antrieb der Räder von Fahrzeugen mit sehr großer Nutzlast, wobei durch ein zumindest einstufiges einer Kraftquelle zugeordnetes Planeten- bzw. Umlaufgetriebe mit wenigstens zwei Antriebswellen, die jeweils mit einem hydrostatischen Antriebsmotor verbunden sind und mit einer Einrichtung zur Regelung der Drehzahl zumindest eines der hydrostatischen Antriebsmotoren, wobei eine der beiden Antriebswellen direkt mit dem Sonnenrad des Planeten- bzw. Umlaufgetriebes und die andere Antriebswelle mit dem drehbar gelagerten Hohlradkranz des Planeten- bzw. Umlaufgetriebes kuppelbar sind, während der Planetenradträger mit einer Antriebswelle gekoppelt ist. Eine der Antriebswellen bzw. ein damit antriebsseitig gekoppeltes Teil, insbesondere der Hohlradkranz eines Planetengetriebes, ist mittels einer Lamellenbremse feststellbar. Die Pumpen sind über ihren vollen Schwenkwinkel verstellbar und damit die von diesen Pumpen gespeisten Motoren in beide Richtungen antreibbar, sowie bei Nullhub der jeweiligen Pumpe feststellbar und durch die Lamllenbremse sicherbar.

Diese bekannte Vorrichtung ermöglicht es, hohe Ausgangsdrehzahlen einzustellen, da durch das Prinzip des Überlagerungsgetriebes die Eingangsdrehzahlen beider Hydromotoren mechanisch addiert werden können. Das Drehmomentvermögen des Getriebes ist jedoch maximal so hoch wie das kleinere Drehmomentvermögen der beiden Antriebseinheiten unter Berücksichtigung der mechanischen Übersetzung zwischen den Antriebswellen. Nachteilig ist ferner, dass ein Antrieb in einer Betriebephase komplett stillzulegen ist und deswegen in dieser Betriebsphase für weitere Antriebsleistungen nicht mehr zur Verfügung steht.

Ein Summierungsgetriebe mit zwei Hydromotoren ist ferner der DE 44 04 829 zu entnehmen. Dieses für mobile Bauund Arbeitsmaschine geeignete Lastschaltgetriebe weist mindestens zwei über eine Pumpe antreibbare eingangswellenseitig jeweils mit mindestens einer Zahnradpaarung in Wirkverbindung stehende Hydromotoren auf, die für einen ersten Fahrbereich der Bau- und Arbeitsmaschine zur Addition der Drehmomente beider Zahnradpaarungen über eine Kupplung miteinander verbunden sind und mindestens ein eine Abtriebswelle aufweisendes Planetengetriebe. Dessen Hohlrad ist über eine Bremse festsetzbar, wobei für einen sich an den ersten Fahrbereich anschließenden weiteren Fahrbereich der Bau- und Arbeitsmaschine zumindest einer der Hydromotoren über die Kupplung von der Antriebswelle des anderen Hydromotors entkuppelbar und über eine weitere Kupplung im Bereich seiner Antriebswelle zur mechanischen Addition der Drehzahlen beider Hydromotoren entsprechend dem Überlagerungsprinzip kraftschlüssig auf das Hohlrad des Planetengetriebes kuppelbar ist. Ein derartiges Summierungsgetriebe mit zwei Hydromotoren ist relativ teuer, weist einen kleinen Wandlungsbereich und einen schlechten Wirkungsgrad auf.

Schließlich ist aus der DE 197 53 729 der Anmelderin ein Fahrantrieb mit einem Antriebsmotor bekannt, der eine Speisepumpe und eine hydrostatische Verstellpumpe antreibt und der einen hydrostatischen Verstellmotor aufweist, der mit der hydrostatischen Verstellpumpe einen hydrostatischen Kreislauf bildet, um ein Getriebe anzutreiben mit Hilfe eines Fahrtrichtungsventils und mit einem Druckminderventil zur Regelung des Steuerdrucks. Der hydrostatische Verstellmotor ist ein Nullhubmotor, dessen Schluckvolumen durch die Veränderung von Steuer- und Hochdruck derart regelbar ist, dass das zu übertragende Drehmoment während des Schaltvorgangs minimal und die Verstellposition des hydrostatischen Verstellmotors über eine Rückmeldefeder im Gleichgewicht mit dem anliegenden Steuer- und Hochdruck steht; das Getriebe ist ein hydrostatisch angetriebenes Zweigang-Getriebe mit Synchronisierung, die die Drehzahl des hydrostatischen Verstellmotors entsprechend der Schaltungsart (vom ersten Gang in den zweiten Gang oder umgekehrt) und dem Stufensprung der Abtriebsdrehzahl automatisch anpasst. Die Antriebslösung eignet sich sowohl für offene als auch für geschlossene hydrostatische Hydraulikkreisläufe sowie für langsam- und schnellfahrende Arbeitsmaschinen.

Aufgabe der vorliegenden Erfindung ist es, ein Zweigang-Synchrogetriebe mit einem Nullhubmotor zu schaffen, das einen sehr einfachen Getriebeaufbau aufweist, mit dem während der Fahrt ein Gangwechsel möglich ist und das nur geringe Druchtriebsverluste aufweist.

Ausgehend von einem Synchrogetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Ausgehend von einem Synchrongetriebe mit einer Antriebswelle, mit einer Abtriebswelle und mit einem Hydromotor sowie mit einer Schalteinrichtung, die mittels eines Schaltventils und eines hydraulischen Zylinders betätigt wird, ist also erfindungsgemäß vorgesehen, dass der Hydromotor ein Nullhubmotor ist, dass die Antriebswelle in einem Lager im Getriebe und in der Antriebswelle des Hydromotors gelagert ist, dass die Schalteinrichtung eine Sperrsynchronisierung ist, die auf der Abtriebswelle angeordnet ist, dass die Schaltmuffe mittels einer Schaltgabel betätigbar ist, welche auf einer Schaltschiene befestigt ist, die als Kolben mit unterschiedlichen Kolbenflächen ausgebildet ist und dass ein Ventilblock am Getriebe angeordnet ist, mit einem Druckminderventil und mit einem 4/2-Wegeventil für das Schalten der Gänge, das elektrisch ansteuerbar und mechanisch in der geschalteten Position feststellbar ist.

In einem derart ausgestalteten Getriebe ist es möglich, dass während der Fahrt ein Gangwechsel erfolgt bei insgesamt vereinfachtem Getriebeaufbau und sehr geringen Durchtriebsverlusten.

Im folgenden wird die Erfindung anhand der Zeichnung näher erläutert, in der ein vorteilhaftes Ausführungsbeispiel dargestellt ist.

### Es zeigen:

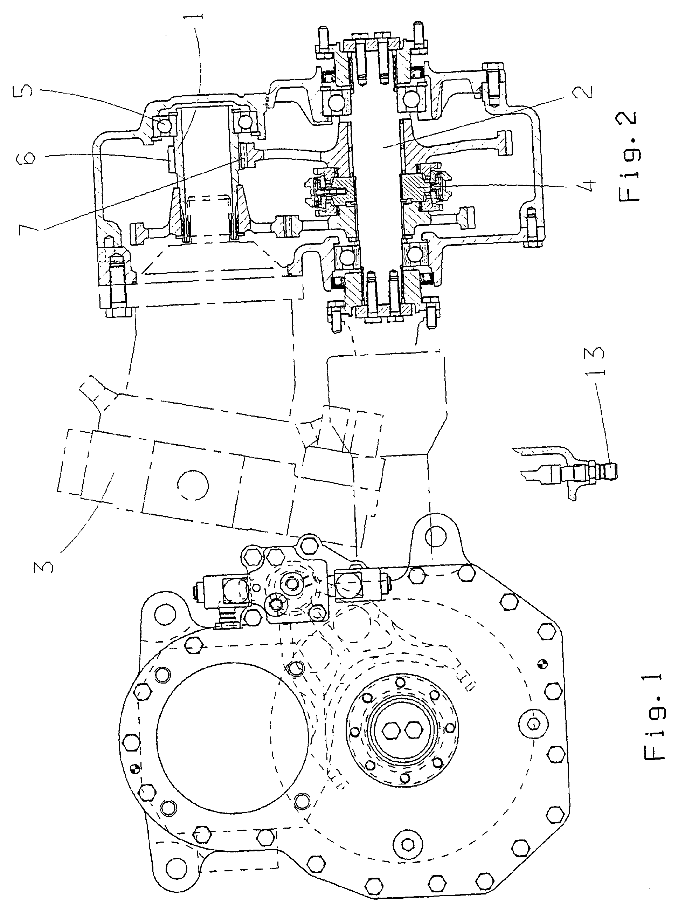

- Fig. 1: eine Stirnansicht,
- Fig. 2: einen Schnitt,
- Fig. 3: einen Teilschnitt und
- Fig. 4: eine Rückansicht eines erfindungsgemäßen Synchrogetriebes.

Als Antriebsmotor ist ein Hydromotor in Form eines Nullhubmotors 3 vorgesehen. Während des Schaltvorgangs wird der Motor 3 auf Schluckvolumen Null gestellt. In diesem Betriebszustand kann kein Motordrehmoment erzeugt werden, auch nicht bei anstehendem Hochdruck. Die Drehzahlanpassung erfolgt mit einer Sperrsynchronisierung, die einerseits im geschalteten Zustand hohe Drehmomente überträgt und andererseits während der Synchronisierphase ein genau definiertes Drehmoment abgibt, welches zum Beschleunigen der Trägheitsmassen und für die Überwindung des Schleppmoments des Hydromotors 3 notwendig ist. Dieses Drehmoment ist derart ausgelegt, dass die zulässige Winkelbeschleunigung des Hydromotors unabhängig vom zu schaltenden Gang nicht überschritten wird und die Synchronisierzeit für den Gangwechsel sehr kurz ist. Da die zu synchronisierenden Massen im ersten und zweiten Gang unterschiedlich sind, ist das jeweils erforderliche Synchronisierdrehmoment durch unterschiedliche Schaltkräfte gewährleistet. Dadurch ist sichergestellt, dass die zulässige spezifische Reibleistung der Synchronisierung nicht überschritten wird. Dieses Getriebe ist sowohl für einen offenen als auch für einen geschlossenen Hydraulikkreislauf geeignet.

Die Antriebswelle 1 ist einmal bei 5 im Getriebe gelagert. Diese Lagerstelle 5 kann als Los- oder Festlager ausgeführt sein. Die zweite Lagerung ist die Antriebswelle des Hydromotors 3. Dies hat den Vorteil, dass die Lagerreibungs- und Panschverluste reduziert werden durch den Wegfall einer zusätzlichen Antriebswellenlagerung. Das Zahnrad 6 für den ersten Gang ist auf der Antriebswelle 1 derart angeordnet, dass es sich in der Nähe der Lagerstelle 5 befindet, sodass die große Kraft an der Antriebswellenverzahnung die Antriebswelle des Hydromotors nur gering belastet (d. h. geringe Wellendurchbiegung für den Hydromotor und geringe Lagerbelastung des Hydromotors). Des weiteren ist die Schrägungsrichtung der Verzahnung 7 derart gewählt, dass in der Hauptfahrtrichtung die Axialkraft aus der Verzahnung die Hydromotorlagerung nicht belastet.

Erfindungsgemäß ist ferner vorgesehen, dass die Synchronisierung auf der Abtriebswelle 2 angeordnet ist. Da die Übersetzung im zweiten Gang gleich/größer 1,0 ist, ist mit der Anordnung der Schalteinrichtung 4 auf der Abtriebswelle 2 kein Getriebehochtreiber vorhanden. Dadurch wird die Geräuschentwicklung reduziert und die Panschverluste im Getriebe vermindert.

Die Schmierölversorgung der Synchronisierung und der Losradlagerung erfolgt ausgehend vom Ölsumpf, dessen Ölniveau ungefähr auf der Mitte der Abtriebswelle 2 liegt. Eine separate Ölpumpe ist somit nicht erforderlich. Die Stirnräder und die Schalteinrichtung 4 sind mit (nicht dargestellten) Ölabweisblechen abgeschottet, um die Panschverluste zu minimieren. Diese Ölabweisbleche werden vorteilhafterweise derart ausgestaltet, dass eine gezielte und genau bestimmte Schmierölmenge an der Laufverzahnung, der Losradlagerung und der Synchronisierung gewährleistet ist.

Die Abtriebswelle 2 kann als Kegelritzelwelle für den Anbau an die Achse oder als Welle mit Anschluß für Gelenkwellen ausgebildet sein. Das Schalten der Gänge erfolgt durch das Verschieben einer Verschiebemuffe mittels einer Schaltgabel. Diese ist auf einer Schaltschiene 9 befestigt, die als Kolben ausgebildet ist. Die Betätigung erfolgt dabei hydraulisch. Die Kolbenflächen 10 sind unterschiedlich, sodass bei gleichem Schaltdruck die Schaltkräfte und somit die Synchronisierdrehmomente für die beiden Gänge optimal aufeinander abgestimmt sind. Dadurch kann die spezifische Belastung an den Reibflächen der Synchronisierung im oberen Bereich angesetzt werden, d. h. trotz der verschiedenen zu synchronisiernden Massenträgheitsmomente und Drehzahlen im ersten und zweiten Gang werden die Reibflächen nicht überlastet.

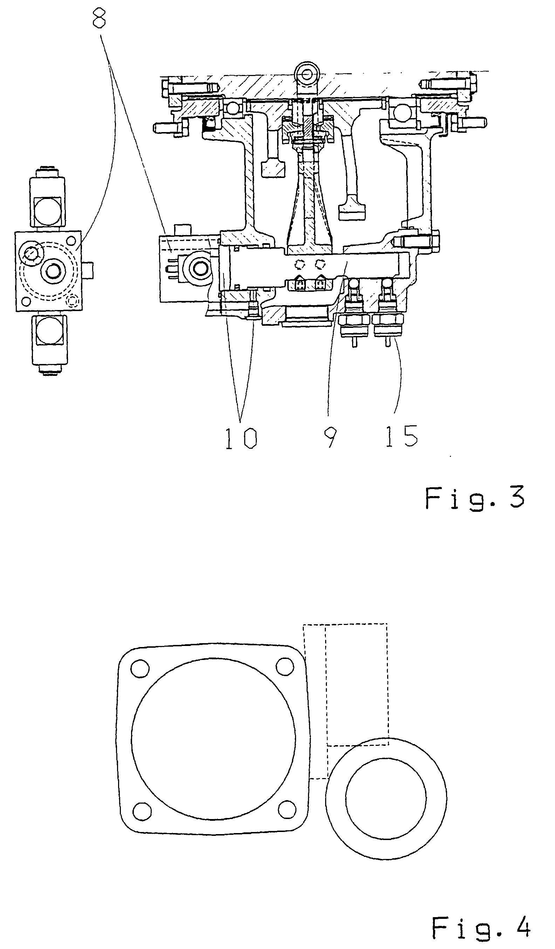

Der in Fig. 3 dargestellte Ventilblock 8 am Getriebe für die Schaltung der Gänge enthält ein Druckminderventil. Der ausgesteuerte Druck für die Schaltung liegt unterhalb des Speisedrucks des hydrostatischen Antriebs. Ferner ist ein 4/2-Wegeventil zum Schalten der Gänge im Ventilblock integriert, das elektrisch angesteuert und mechanisch in der geschalteten Position gehalten wird, d. h. dass kein undefiniertes Schalten bei Stromausfall auftritt. Der Ventilblock ist derart angeordnet, dass die Kolbenräume des Schaltkolbens direkt über Kontaktbohrungen mit dem Gangschaltventil in Verbindung stehen.

Zur Überwachung der Schaltpunkte für die Hoch- und Rückschaltung ist ein Drehzahlgeber 13 vorgesehen. Ein vorzugsweise in der Tankleitung des Hydromotors angeordneter (nicht dargestellter) Temperaturschalter oder -sensor misst die Öltemperatur im Hydraulikkreislauf. Dies ist erforderlich, da die Schleppmomente des Hydromotors von der Ölviskosität abhängig sind. So kann z. B. bei kaltem Öl der Schaltpunkt von der Steuerelektronik so weit abgesenkt werden, dass die spezifische Belastung der Synchroreibflächen trotz erhöhtem Motorschleppmoment nicht überschritten wird.

Die Endstellung des Schaltkolbens wird durch zwei Sensoren erkannt, die als Stößelschalter 15 ausgestaltet sind. Eine mechanische Arretierung des Schaltkolbens durch die beiden Stößel ist somit bei nicht vorhandenem Schaltdruck gegeben. Die Synchronisierung kann durch eine mechanische Einrichtung am Schaltkolben auf Neutralstellung geschaltet werden, um das Fahrzeug abschleppen zu können (nicht dargestellt).

### Bezugszeichen

- 1: Antriebswelle
- 2: Abtriebswelle
- 3: Hydromotor
- 4: Schalteinrichtung
- 5: Lagerstelle für die Antriebswelle
- 6: Zahnrad für den ersten Gang
- 7: Schrägverzahnung
- 8: Ventilblock
- 9: Schaltschiene
- 10: Kolbenfläche
- 13: Drehzahlgeber
- 15: Stößelschalter

## Patentansprüche

1. Synchrogetriebe, mit einer Antriebswelle, mit einer Abtriebswelle und mit einem Hydromotor sowie mit einer Schalteinrichtung, die mittels eines Schaltventils und eines Hydraulikzylinders betätigbar ist, **gekennzeichnet durch** die folgenden Bauteile:
der Hydromotor ist ein Nullhubmotor;
die Antriebswelle ist in einem Lager im Getriebe und in der Antriebswelle des Hydromotors gelagert;
die Schalteinrichtung ist eine Sperrsynchronisierung, die auf der Abtriebswelle angeordnet ist;
eine Schaltmuffe, die mittels einer Schaltgabel betätigbar ist, ist auf einer Schaltschiene befestigt, die als Kolben mit unterschiedlichen Kolbenflächen ausgebildet ist; und
ein am Getriebe angeordneter Ventilblock ist mit einem Druckminderventil und mit einem 4/2-Wegeventil für das Schalten der Gänge versehen, das elektrisch ansteuerbar und mechanisch in der geschalteten Position feststellbar ist.

2. Synchrogetriebe nach Anspruch 1, **dadurch gekennzeichnet, dass** das Lager im Getriebe zur Aufnahme der Antriebswelle (1) ein Loslager ist.

3. Synchrogetriebe nach Anspruch 1, **dadurach gekennzeichnet**, dass das Lager im Getriebe zur Aufnahme der Antriebswelle (1) ein Festlager ist.

4. Synchrogetriebe nach einem der vorhergehenden Ansprüche, **dadurch gekennzeichnet, dass** das Zahnrad (6) für den ersten Gang in der Nähe des Lagers zur Aufnahme der Antriebswelle auf dieser angeordnet ist.

5. Synchrogetriebe nach einem der vorhergehenden Ansprüche, **dadurch gekennzeichnet, dass** die Abtriebswelle (2) eine Kegelritzelwelle ist.

6. Synchrogetriebe nach einem der vorhergehenden Ansprüche, **dadurch gekennzeichnet, dass** die Abtriebswelle mit Anschlußteilen für Gelenkwellen versehen ist.

7. Synchrogetriebe nach einem der vorhergehenden Ansprüche, **dadurch gekennzeichnet, dass** ein Drehzahlgeber zur Überwachung der Schaltpunkte für das Hoch- und Rückschalten vorgesehen ist.

8. Synchrogetriebe nach einem der vorhergehenden Ansprüche, **dadurch gekennzeichnet, dass** ein Temperaturfühler für die Temperatur des Öles im Hydraulikkreis vorgesehen ist.

9. Synchrogetriebe nach einem der vorhergehenden Ansprüche, **dadurch gekennzeichnet, dass** zwei Sensoren zum Erkennen der Endstellungen des Schaltkolbens vorgesehen sind.

10. Synchrogetriebe nach Anspruch 9, **dadurch gekennzeichnet, dass** die Sensoren Stößelschalter (15) sind.

11. Synchrogetriebe nach einem der vorhergehenden Ansprüche, **dadurch gekennzeichnet, dass** die Sperrsynchronisierung mit einer Anordnung versehen ist, mit der sie mechanisch auf Neutralstellung schaltbar ist.

12. Synchrogetriebe nach einem der vorhergehenden Ansprüche, **dadurch gekennzeichnet, dass** den Stirnrädern und der Schalteinrichtung Ölabweisbleche zugeordnet sind.

13. Synchrogetriebe nach einem der vorhergehenden Ansprüche, **dadurch gekennzeichnet, dass** die Schaltschiene in den beiden Endstellungen durch Stößel oder mechanische Vorrichtungen arretiert werden.
